(19) Europäisches Patentamt
European Patent Office
Office européen des brevets

(11) Numéro de publication : **0 021 032**
**B1**

(12) **FASCICULE DE BREVET EUROPÉEN**

(45) Date de publication du fascicule du brevet : **09.03.83**

(51) Int. Cl.³ : **C 07 F 7/22**

(21) Numéro de dépôt : **80102793.9**

(22) Date de dépôt : **20.05.80**

(54) **Procédé de préparation de trihalogénures organostanniques.**

(30) Priorité : **23.05.79 FR 7913108**

(43) Date de publication de la demande :
**07.01.81 Bulletin 81/01**

(45) Mention de la délivrance du brevet :
**09.03.83 Bulletin 83/10**

(84) Etats contractants désignés :
**BE CH DE GB IT LI NL**

(56) Documents cités :
**EP A 0 000 747**
**EP A 0 002 019**
**FR A 2 285 392**
**FR A 2 306 208**
**FR A 2 368 494**

**CHEMICAL ABSTRACTS, vol. 86, no. 17, 25 avril 1977, page 560, no. 121463n Columbus, Ohio, U.S.A. R.E. HUTTON et al. : « Synthesis of novel substituted alkyltin halides ».**

(73) Titulaire : **SOCIETE NATIONALE ELF AQUITAINE**
**Tour Aquitaine**
**F-92400 Courbevoie (FR)**

(72) Inventeur : **Foure, Michel**
***Route Nationale* 117**
**F-64170 Artix (FR)**

(74) Mandataire : **Bühling, Gerhard, Dipl.-Chem. et al**
**Patentanwaltsbüro Tiedtke-Bühling-Kinne**
**Grupe-Pellmann Bavariaring 4**
**D-8000 München 2 (DE)**

**EP 0 021 032 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

Procédé de préparation de trihalogénures organostanniques

La présente invention constitue un perfectionnement à la production de certains trihalogénures organostanniques à partir de composés stanneux par la réaction de ces derniers avec des composés oléfiniques en présence d'un hydracide. Les trihalogénures organostanniques constituent des matières premières importantes pour la fabrication de composés organiques de l'étain utilisés comme stabilisants, en particulier pour le polychlorure de vinyle.

Etant donné l'utilité industrielle bien connue des trihalogénures organostanniques, les méthodes de préparation de ces corps ont donné lieu à de nombreux travaux. Ainsi le brevet FR 2 285 392 décrit un procédé qui réside dans la réaction d'un halogénure stanneux et d'une oléfine comportant un groupement carbonyle adjacent à la double liaison carbone-carbone, en présence d'un halogénure d'hydrogène. Un procédé analogue est connu par la littérature : « Adv. Chem. Séries, 1976, 157, pages 123 à 133 ». Dans la pratique de ce procédé, il a été nécessaire d'effectuer la réaction dans un solvant polaire tel que éther alcoylique et de préférence dans l'éther diéthylique. Ce procédé implique donc l'élimination d'un solvant, et l'extraction du produit pur à l'aide d'un autre solvant.

Le brevet français 2 306 208 décrit un procédé de préparation d'halogénures organostanniques à partir d'étain métallique par réaction de l'étain métallique avec un halogénure hydrogène et une oléfine activée par un carbonyle. Selon le procédé connu on obtient simultanément des dihalogénures et des trihalogénures organostanniques avec prédominance de dihalogénure.

Le brevet européen 747 décrit la réaction d'une oléfine activée par un carbonyle avec de l'étain métallique et HCL gazeux ou aqueux. Selon le procédé connu on obtient un mélange de dihalogénures et de trihalogénures organostanniques.

Le problème de l'invention est de fournir un procédé pour la production de certains trihalogénures organostanniques avec des rendements améliorés.

Le procédé de préparation des trihalogénures stanniques est caractérisé en ce que ces composés sont obtenus par réaction d'un composé stanneux avec un excès d'au moins 0,5 mole d'oléfine par mole de composé stanneux, en présence d'un hydracide, en préférence d'un acide halohydrique, dans un milieu exempt de solvant.

Le composé stanneux peut être un halogénure stanneux (chlorure, bromure, iodure), mais également et de préférence il est de l'oxyde stanneux SnO, de préférence sous forme finement divisé.

Le composé oléfinique est de la forme

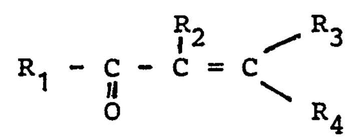

dans laquelle $R_2$, $R_3$, $R_4$ représentent de l'hydrogène ou un reste hydrocarboné alkylé contenant de 1 à 3 atomes de carbone ; $R_1$ représente un groupement alkyle, un hydroxyle, un groupement hydrocarbure contenant de l'oxygène. Les trihalogénures organostanniques obtenus sont de la forme :

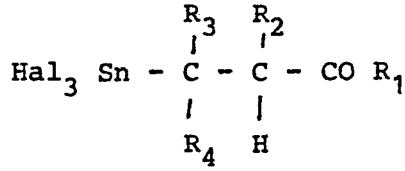

Parmi les oléfines répondant à la formule précédente on peut citer sans que cette liste soit limitative : l'acrylate de méthyle, l'acrylate d'éthyle, l'acrylate d'hexyle, l'acide acrylique, la vinylméthylcétone, le crotonate de méthyle.

L'halogène de l'acide halohydrique et de l'halogénure stanneux peut être : chlore, brome, iode, ou même fluor, mais il est de préférence du chlore ; on utilise donc de préférence l'acide chlorhydrique et le chlorure stanneux.

La quantité d'oléfine est utilisée en excès par rapport au composé stanneux ; elle est comprise entre 1,5 mole et 6 moles pour 1 mole de composé stanneux. D'excellents résultats sont obtenus lorsque cette quantité est de 3,5 à 4,5 moles et de préférence lorsqu'elle est de 4 moles d'oléfine pour 1 mole de composé stanneux.

Il n'était pas du tout évident que la réaction effectuée en absence de solvant polaire, et en présence d'un excès d'oléfine conduirait à de très bons résultats ; en effet, dans le brevet français 3 368 494 qui concerne la préparation de dihalogénures diorganostanniques par réaction d'étain, d'acide chlorhydrique et d'oléfines activées par des groupes carbonyles, il est indiqué que si l'oléfine sert en même temps de solvant, il se produit d'importantes réactions secondaires de polymérisation. C'est donc un résultat tout à fait inattendu que le fait de procéder selon l'invention en absence de solvant et en présence d'un excès d'oléfine, conduise aux excellents résultats décrits dans les exemples.

L'halogénure d'hydrogène est introduit sous forme d'un courant gazeux. La température réactionnelle est comprise entre 15° et 70 °C ; elle se situe de préférence aux alentours de 25° à 30 °C ; le procédé est exécuté à pression atmosphérique.

Les composés trihalogénures organostanniques préparés selon le procédé de la présente invention peuvent être convertis comme il est décrit dans le brevet français 2 285 392 en composés organostanniques stabilisants des polymères halogénés vinyliques, par réaction de ces composés trihalogénostanniques avec des acides gras organiques, des esters d'acide maléique, des thiols alcoyliques ou des mercaptoesters, conduisant à des composés de forme $RSnA_3$ dans laquelle R représente le reste du groupement provenant de l'oléfine de départ, et A représente le résidu acide organique choisi dans le groupe $—S(CH_2)_nCOO$ alcoyle, où n = 1 ou 2, —S alcoyle, —OCO alcoyle et OCOH = CHCOO alcoyle.

Les composés organostanniques préparés selon le procédé décrit dans la présente invention peuvent également être convertis en composés organostanniques stabilisants des résines halogénovinyliques comme il est décrit dans le brevet français publié sous le n° 79/13109, par réaction des composés trihalogénostanniques avec des esters de mercaptoalkyles $HS(CH_2)_n\ O\underset{\underset{O}{\parallel}}{C}R_6$ dans lesquels $R_6$ est un alkyle contenant de 1 à 18 atomes de carbone ; il peut appartenir à tout mono ou di-acide aliphatique ; cependant les esters préférés dérivent des acides gras, notamment caprylique, pélargonique, caprique, undécanoïque, laurique, myristique, palmitique, stéarique, isostéariques ou de mélanges de tels acides.

L'invention est illustrée par les exemples non limitatifs suivants :

## Exemple 1

Dans un ballon à 3 tubulures de 500 ml muni d'un agitateur, d'un thermomètre, d'un réfrigérant, d'un tube d'amenée de gaz, et d'un système de refroidissement externe, on introduit 33,8 g (0,25 mole) d'oxyde stanneux, 86 g (1 mole) d'acrylate de méthyle. On agite vigoureusement, et on introduit l'acide chlorhydrique sous forme gazeuse de telle sorte que celui-ci soit consommé au fur et à mesure de l'introduction. La température est maintenue entre 25° et 30 °C. Lorsque le mélange réactionnel n'absorbe plus HCl, l'excès d'acrylate de méthyle est distillé. Il reste un résidu que l'on purifie par dissolution dans le chloroforme, décantation, séchage sur chlorure de calcium et évaporation du solvant. On obtient 77,5 g soit avec un rendement de 99 % par rapport à l'oxyde d'étain, un composé cristallisé blanc répondant à la formule $Cl_3SnCH_2CH_2COOCH_3$. Son point de fusion est 71 °C.

## Exemple 2

L'appareillage et le mode opératoire étant les mêmes que dans l'exemple 1, on remplace l'acrylate de méthyle par 100,3 g (1 mole) d'acrylate d'éthyle. On obtient 82,4 g d'huile incolore identifiée en infra rouge comme étant $Cl_3SnCH_2CH_2CO_2C_2H_5$. Ce composé est obtenu avec un rendement de 100 %.

## Exemple 3

L'appareillage et le mode opératoire étant les mêmes que dans l'exemple 1, on introduit dans le ballon 67,5 g (0,5 mole) d'oxyde stanneux et 250 g (2 moles) de méthylvinylcétone ; on agite vigoureusement tout en introduisant HCl sous forme gazeuse. Lorsque la réaction est terminée, on distille l'excès de méthylvinylcétone. On purifie le produit dans le chloroforme et l'on obtient 144 g soit avec un rendement de 98 % un solide blanc identifié par spectroscopie comme étant $Cl_3SnCH_2CH_2COCH_3$.

## Exemple 4

On opère comme dans les exemples précédents ; on introduit dans le ballon 67,5 g (0,5 mole) d'oxyde stanneux et 144 g (2 moles) d'acide acrylique. On introduit HCl gazeux aussi rapidement que l'absorption le permet tout en maintenant la température entre 25° et 30 °C. Après la fin de l'absorption l'excès d'acide acrylique est distillé sous vide. On purifie le résidu solide dans le chloroforme et après distillation de celui-ci on obtient 146 g d'un solide blanc dont la formule a été identifiée par spectrographie comme étant $Cl_3SnCH_2CH_2COOH$. Rendement : 98 % par rapport à l'oxyde d'étain.

## Exemple 5

On opère comme dans l'exemple 1, mais en présence de solvant et sans excès d'acrylate de méthyle. On introduit dans le ballon tricol 67,5 (0,5 mole) d'oxyde stanneux, 43 g (0,5 mole) d'acrylate de méthyle et 200 ml d'éther diéthylique. On agite vigoureusement et on introduit le gaz chlorhydrique à la vitesse où celui-ci est consommé en maintenant la température entre 25° et 30 °C. L'éther est évaporé sous vide. Le

produit est dissous dans 250 ml de chloroforme. Après décantation on sèche la phase organique sur $Cl_2Ca$, filtre et le solvant et les produits volatiles sont éliminés sous vide. On obtient 141 g (soit avec un rendement de 90 % seulement par rapport à l'oxyde stanneux) un produit blanc qui, redistillé a un point de fusion de 73 °C. Il répond à la formule $Cl_3SnCH_2CH_2CO_2CH_3$.

Exemples 6 à 8

Ces essais sont réalisés selon le procédé décrit dans l'exemple 5, c'est-à-dire selon l'art antérieur, en présence d'un solvant et sans excès d'oléfine, ou avec un très faible excès. L'exemple 6 est réalisé avec $SnCl_2$, le solvant étant le diméthoxyéthane ; l'exemple 7 est réalisé avec $SnCl_2$ en présence d'un léger excès d'oléfine et de l'éther diéthylique comme solvant ; l'exemple 8 est réalisé avec SnO, et en présence de diméthoxy éthane comme solvant.

Tableau 1

| EXEMPLE N° | OLEFINE (1) | COMPOSE STANNEUX (2) | RAPPORT MOLAIRE (1)/(2) | SOLVANT | RENDEMENT % |
|---|---|---|---|---|---|
| 1 | acrylate de méthyl | SnO | 4 | néant | 99 |
| 2 | d'éthyl | " | " | " | 100 |
| 3 | méthylvinyl cétone | SnO | 4 | néant | 98 |
| 4 | acide acrylique | SnO | 4 | néant | 98 |
| 5 | acrylate de méthyle | SnO | 1 | éther di-éthylique | 90 |
| 6 | acrylate de méthyle | $SnCl_2$ | 1 | diméthoxy éthane | 89 |
| 7 | acrylate d'éthyle | $SnCl_2$ | 1,2 | éther diéthylique | 79 |
| 8 | acrylate d'éthyle | SnO | 1 | diméthoxy éthane | 92 |

Les résultats des exemples 1 à 8 sont regroupés dans le tableau I. La comparaison des résultats permet de constater que les meilleurs rendements sont obtenus lorsque le procédé est exécuté selon le mode opératoire décrit et revendiqué dans la présente invention.

**Revendications**

1. Procédé de préparation de trihalogénures organostanniques obtenus par l'action d'un composé stanneux, sur un composé oléfinique activé par un groupement carbonyle adjacent à la double liaison carbone-carbone, en présence d'un hydracide, caractérisé en ce que le milieu réactionnel est exempt de tout solvant étranger, mais contient un excès d'oléfine, cet excès étant d'au moins 0,5 mole par mole de composé stanneux.

2. Procédé suivant la revendication 1, caractérisé en ce que le composé stanneux de départ est un halogénure stanneux, il est de préférence le chlorure stanneux.

3. Procédé suivant la revendication 1, caractérisé en ce que le composé stanneux de départ est l'oxyde stanneux SnO.

4. Procédé suivant la revendication 1, caractérisé en ce que la quantité du composé oléfinique de la forme

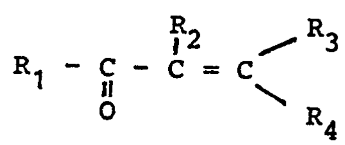

pour l'obtention de

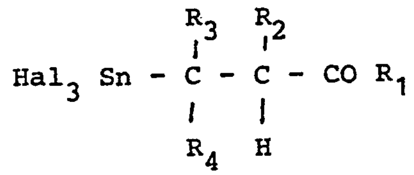

dans laquelle $R_2$, $R_3$, $R_4$, représentent de l'hydrogène ou un reste hydrocarboné alkyle contenant de 1 à 3 atomes de carbone, $R_1$ représente un groupement alkyle, un hydroxyle, un groupement hydrocarboné contenant de l'oxygène, est de 1,5 mole à 6 moles, et de préférence de 3,5 moles à 4,5 moles par mole de composé stanneux.

5. Procédé selon la revendication 4, caractérisé en ce que la quantité de composé oléfinique est de 4 moles pour 1 mole de composé stanneux.

6. Procédé suivant la revendication 4 caractérisé en ce que l'oléfine est l'acrylate de méthyle, l'acrylate d'éthyle, l'acrylate d'hexyle, l'acide acrylique, la vinyl méthylcétone, le crotonate de méthyle.

7. Procédé suivant la revendication 1, caractérisé en ce que l'hydracide est l'acide chlorhydrique, introduit sous forme d'un courant gazeux, la température réactionnelle étant comprise entre 15° et 70 °C et de préférence entre 25 °C et 30 °C, et le procédé étant exécuté à pression atmosphérique.

## Claims

1. A process for the preparation of organostannic trihalides by the action of a stannous compound on an olefinic compound activated by a carbonyl group adjacent to the carbon-carbon double bond in the presence of a hydrogen acid, characterized in that the reaction medium is exempt from any foreign solvent but contains an excess of the olefine, said excess amounting to at least 0.5 moles per mole of the stannous compound.

2. A process according to claim 1 characterized in that the starting stannous compound is a stannous halide, preferably stannous chloride.

3. A process according to claim 1 characterized in that the starting stannous compound is stannous oxide (SnO).

4. A process according to claim 1 characterized in that the amount of the olefinic compound of the formula

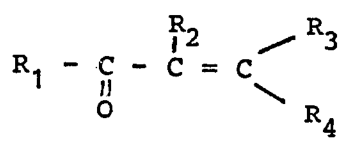

used for the preparation of

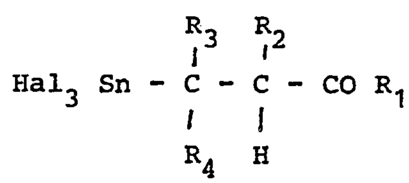

wherein $R_2$, $R_3$ and $R_4$ represent hydrogen or an alkyl hydrocarbon radical containing from 1 to 3 carbon atoms ; and $R_1$ represents an alkyl grouping, a hydroxyl group or an oxygen-containing hydrocarbon grouping, is from 1.5 to 6 moles, preferably from 3.5 to 4.5 moles, per mole of the stannous compound.

5. A process according to claim 4 characterized in that the amount of the olefinic compound is 4 moles per 1 mole of the stannous compound.

6. A process according to claim 4 characterized in that the olefine is methyl acrylate, ethyl acrylate, hexyl acrylate, acrylic acid, vinyl methyl ketone or methyl crotonate.

7. A process according to claim 1 characterized in that the hydrogen acid is hydrochloric acid

introduced in form of a gas stream, the reaction temperature is between 15° and 70 °C, preferably between 25° and 30 °C, and the process is carried out at atmospheric pressure.

**Ansprüche**

1. Verfahren zur Herstellung von Organozinn(IV)-trihalogeniden durch Einwirkung einer Zinn(II)-Verbindung auf eine olefinische Verbindung, die durch eine der Kohlenstoff-Kohlenstoff-Doppelbindung benachbarte Carbonylgruppe aktiviert ist, in Gegenwart einer Wasserstoffsäure, dadurch gekennzeichnet, daß das Reaktionsmedium frei von allen fremden Lösungsmitteln ist, jedoch einen Überschuß des Olefins enthält, der mindestens 0,5 mol pro Mol der Zinn(II)-Verbindung beträgt.

2. Verfahren nach Anspruch 1, dadurch gekennzeichnet, daß die Ausgangs-Zinn(II)-Verbindung ein Zinn(II)-halogenid und vorzugsweise Zinn(II)-chlorid ist.

3. Verfahren nach Anspruch 1, dadurch gekennzeichnet, daß die Ausgangs-Zinn(II)-Verbindung Zinn(II)-oxid ist.

4. Verfahren nach Anspruch 1, dadurch gekennzeichnet, daß die Menge der zur Herstellung von

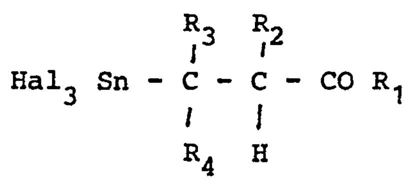

eingesetzten, olefinischen Verbindung der Formel

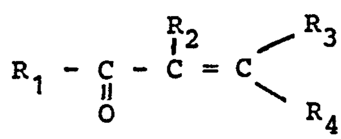

worin $R_2$, $R_3$ und $R_4$ jeweils ein Wasserstoffatom oder einen 1 bis 3 Kohlenstoffatome enthaltenden Alkylkohlenwasserstoffrest bedeuten und $R_1$ eine Alkylgruppierung, eine Hydroxylgruppe oder eine sauerstoffhaltige Kohlenwasserstoffgruppierung bedeutet, 1,5 bis 6 mol und vorzugsweise 3,5 bis 4, 5 mol pro Mol der Zinn(II)-Verbindung beträgt.

5. Verfahren nach Anspruch 4, dadurch gekennzeichnet, daß die Menge der olefinischen Verbindung 4 mol pro 1 mol der Zinn(II)-Verbindung beträgt.

6. Verfahren nach Anspruch 4, dadurch gekennzeichnet, daß das Olefin Methylacrylat, Ethylacrylat, Hexylacrylat, Acrylsäure, Vinylmethylketon oder Methylcrotonat ist.

7. Verfahren nach Anspruch 1, dadurch gekennzeichnet, daß die Wasserstoffsäure in Forme eines Gasstromes eingeführter Chlorwasserstoff ist, die Reaktionstemperatur zwischen 15° und 70 °C und vorzugsweise zwischen 25° und 30 °C liegt und das Verfahren bei Atmosphärendruck durchgeführt wird.